# FASCICULE DE BREVET EUROPEEN

(11) **EP 3 713 810 B1**
(45) Date de publication et mention de la délivrance du brevet: **05.01.2022**
(21) Numéro de dépôt: 18819526.7
(22) Date de dépôt: 22.11.2018
(51) Int. Cl.: B62B 9/22, A47D 9/02

(54) **DISPOSITIF PORTATIF DE BALANCEMENT DE POUSSETTE**
TRAGBARE VORRICHTUNG ZUM SCHAUKELN EINES KINDERWAGENS
PORTABLE DEVICE FOR ROCKING A STROLLER

(30) Priorité: 22.11.2017 FR 1771247
(43) Date de publication de la demande: 30.09.2020
(73) Titulaire: Baby M, 06400 Cannes (FR)
(72) Inventeur: CARRERAS, Franck, 06400 Cannes (FR); CARRERAS, Julie, 06400 Cannes (FR)
(74) Mandataire: Bonneau, Florence
(86) Numéro de dépôt international: PCT/FR2018/000253
(87) Numéro de publication internationale: WO 2019/102080

(56) Documents cités:
- DE-A1-102005 004 501
- DE-U1-202005 017 014
- GB-A- 2 432 307
- US-A- 2 552 223

## Description

### Domaine technique de l'invention

La présente invention concerne les dispositifs destinés à balancer et bercer les véhicules des très jeunes enfants pour les accompagner dans leur endormissement et concerne en particulier un dispositif portatif et intelligent de balancement pour poussette pour préparer l'enfant à l'endormissement.

### Etat de la technique

Il existe un certain nombre de dispositifs pour balancer et bercer automatiquement les poussettes d'enfant. Ces dispositifs consistent à induire un mouvement de va-et-vient à la poussette de façon à accompagner l'enfant dans son endormissement. Ces dispositifs remplacent les parents dans l'étape d'apaisement et d'endormissement de leur enfant. En effet, par commodité pour les parents, la poussette est souvent utilisée comme un second lit pour l'enfant qui a besoin de beaucoup dormir dans les premiers mois de sa vie. Lorsque les parents et l'enfant sont hors de la maison, l'enfant peut se retrouver dans un environnement peu favorable à l'endormissement et le simple fait de mettre en mouvement la poussette peut avoir un effet apaisant. Dans certains cas, comme par exemple dans un restaurant, chez des amis ou même dans un lieu public, le mouvement de va-et-vient de la poussette donné par le parent pour bercer l'enfant et l'aider à trouver le sommeil peut être fastidieux. En particulier dans ces cas là, l'utilisation d'un dispositif pour bercer automatiquement la poussette peut s'avérer très utile. Néanmoins, ces dispositifs présentent des inconvénients.

Un premier type de dispositif de bercement décrit par exemple dans les documents FR2651980 et WO2014/013482 est composé d'un galet ou d'une roue de friction destiné à entraîner l'une des roues de la poussette. L'inconvénient de ce type de dispositif est qu'il doit être fixé à la poussette pour être fonctionnel et donc adapté pour chaque type de poussette.

Un second type de dispositif de balancement se présente sous forme d'une plateforme sur laquelle se pose une ou plusieurs roues de la poussette. Les documents EP2418140 et EP0415736 décrivent de tels dispositifs. Mais du fait de leur taille imposante, ils ne sont pas destinés à un usage nomade en particulier en dehors de la maison.

Le document DE102005004501 décrit un dispositif permettant de provoquer un mouvement alternatif et basculant d'un lit ou d'une poussette pour enfant.

Enfin, le document GB 2 432 307 décrit un dispositif de basculement pour poussette comprenant deux unités comportant chacune une base en contact avec le sol et une plate-forme. Une des unités est motrice et comporte un moteur conçu pour entrainer la plate-forme par rapport à sa base. Une roue de poussette est posée sur l'unité motrice et une seconde roue est posée sur la seconde unité dite esclave.

Un autre inconvénient de ces systèmes repose sur le risque de conditionner l'endormissement de l'enfant à un mouvement particulier de va-et-vient en continu produit par ces dispositifs. En effet, ces dispositifs fonctionnent un certain temps avant de s'arrêter selon des cycles prédéfinis ou définis par l'utilisateur et selon une fréquence donnée mais ne prennent pas en compte d'autres paramètres propres à l'enfant et liés à l'environnement et qui peuvent éviter le conditionnement.

En outre, la mise en route et l'arrêt de ces dispositifs n'est pas pratique lorsqu'il s'agit d'actionner un interrupteur situé sur le dispositif sous la poussette. Ce manque de facilité d'utilisation peut induire un usage un peu subit par les parents qui ont tendance alors à laisser le dispositif fonctionner plus longtemps que nécessaire.

### Exposé de l'invention

C'est pourquoi le but de l'invention est de réaliser un dispositif de balancement pour poussette qui accompagne l'enfant dans l'étape qui précède l'endormissement, qui pallie les inconvénients précités et dont la mise en route et l'arrêt sont facilités.

L'objet de l'invention est donc un dispositif de balancement de poussette comprenant au moins un élément motorisé muni d'un plateau supérieur qui se déplace dans un mouvement de va-et-vient par rapport à un plateau fixe posé au sol, la face externe du plateau supérieur étant adaptée pour recevoir une roue de la poussette. Selon l'invention, le dispositif comprend un moyen pour démarrer automatiquement le mouvement de va-et-vient par un geste volontaire de l'utilisateur consistant à pousser la poussette de façon à entraîner le plateau supérieur de l'élément motorisé.

### Description brève des figures

Les buts, objets et caractéristiques de l'invention apparaîtront plus clairement à la lecture de la description qui suit faite en référence aux dessins dans lesquels :
La figure 1 représente un schéma d'ensemble du dispositif selon l'invention et d'une poussette,
La figure 2 représente le dispositif selon l'invention en trois dimensions,
La figure 3 représente une vue éclatée du dispositif selon l'invention,
La figure 4 représente un bloc diagramme du circuit électrique du dispositif selon l'invention,
La figure 5 représente le schéma global d'utilisation du dispositif selon l'invention en tant qu'objet connecté.

### Description détaillée de l'invention

### ASPECTS MECANIQUES DU DISPOSITIF

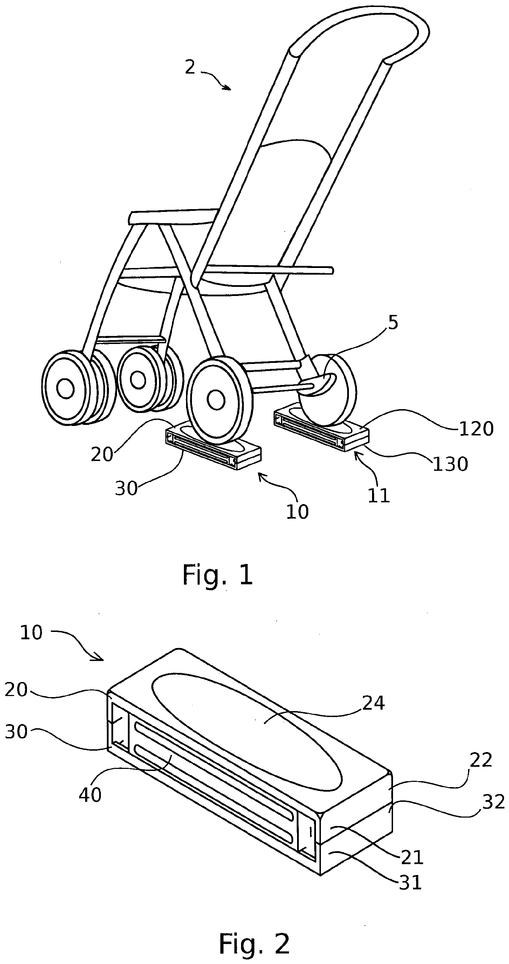

Le dispositif selon l'invention comporte au moins un élément principal 10 équipé d'un moteur. Selon le mode de réalisation préféré de l'invention, le dispositif comprend un élément secondaire 11. De préférence, l'élément secondaire n'est pas motorisé. Les deux éléments sont destinés à recevoir chacun une roue arrière d'une poussette 2 comme on peut le voir sur la figure 1. L'élément principal est également appelé élément motorisé. Chaque élément 10 et 11 possède respectivement un plateau fixe 30, 130 posé au sol et au moins un plateau mobile 20, 120 dont la face externe est adaptée pour recevoir et supporter une roue arrière de la poussette 2, le frein 5 de la poussette étant actionné pour empêcher la rotation des roues arrières.

En référence à la figure 2, l'élément motorisé 10 comporte un plateau fixe 30 posé sur le sol, un plateau intermédiaire 40 mobile par rapport au plateau fixe et un plateau supérieur 20 lui même mobile par rapport au plateau intermédiaire. Le plateau supérieur 20 comporte des moyens pour empêcher la roue de sortir du plateau involontairement, tels qu'un revêtement antidérapant 24 ou bien une forme en cuvette. Le plateau supérieur 120 de l'élément secondaire 11 comporte des moyens identiques.

L'élément motorisé 10 comporte un moteur et des moyens pour mettre en mouvement selon une trajectoire rectiligne et en va-et-vient le plateau intermédiaire par rapport au plateau fixe et pour mettre en mouvement selon une trajectoire rectiligne et en va-et-vient le plateau supérieur par rapport au plateau intermédiaire. Les deux mouvements rectilignes de va-et-vient sont produits selon le même axe. Les plateaux fixe et supérieur comprennent des moyens de guidage tels que des barres 21, 22, 31 et 32 le long desquelles coulisse le plateau intermédiaire.

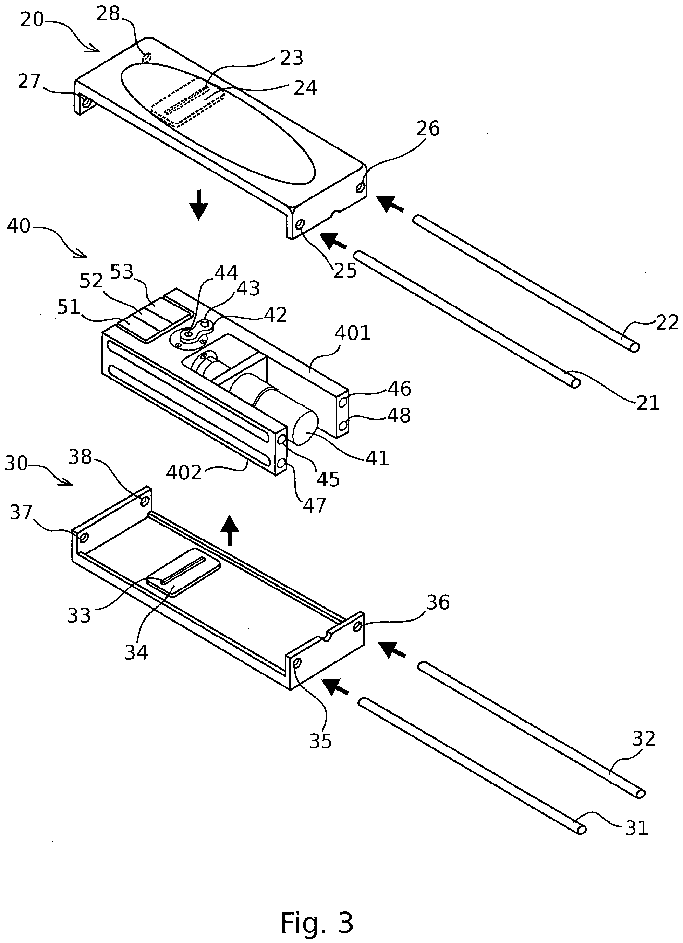

En référence à la figure 3, le plateau intermédiaire 40 de l'élément motorisé 10 comporte une face supérieure 401 sur laquelle est positionné le plateau supérieur 20 et une face inférieure 402 non visible sur la figure et sur laquelle est positionné le plateau fixe 30. L'élément motorisé 10 comporte un moteur 41 fixé au plateau intermédiaire 40. Le moteur 41 entraîne un axe 44 grâce à un engrenage non représenté sur la figure comprenant des pignons coniques pour le renvoi d'angle, sur lequel est fixé une manivelle 42. La manivelle 42 est donc entraînée en rotation autour de l'axe 44 sur lequel elle est fixée par une de ses extrémités tandis que l'autre extrémité libre de la manivelle comporte une pièce 43 appelée maneton. Le moteur 41 entraine également en rotation un second axe et une seconde manivelle comportant un maneton sur son extrémité libre, le tout étant non représentés sur la figure car situé sur la face non visible 402 du plateau intermédiaire. Les deux manivelles de forme identique tournent dans des plans parallèles entre eux et parallèles au sol sur lequel est posé le plateau fixe 30.

Le plateau supérieur 20 comporte une rainure 23 située sur une pièce 24 fixée sur la face interne du plateau supérieur c'est à dire celle en regard de la face supérieure 401 du plateau intermédiaire. De même, le plateau fixe 30 comporte une pièce 34 pourvue d'une rainure 33, la pièce 34 étant fixée sur la face interne du plateau fixe 20 c'est à dire celle en regard de la face 402 du plateau intermédiaire. Lors de l'assemblage du plateau supérieur 20 et du plateau intermédiaire 40, le maneton 43 est placé dans la rainure 23. De même, lors de l'assemblage du plateau fixe et du plateau intermédiaire le maneton de la seconde manivelle est placé dans la rainure 33. Lorsque l'élément motorisé 10 est complètement assemblé, les barres 21 et 22 sont insérées dans les cavités cylindriques 45 et 46 du plateau intermédiaire 40 et fixées aux perçages respectifs 25, 27 et 26, 28 du plateau supérieur 20. De même, les barres 31 et 32 sont insérées dans les cavités cylindriques 47 et 48 du plateau intermédiaire 40 et fixées aux perçages respectifs 35, 37 et 36, 38 du plateau fixe 30.

La mise en route du moteur entraine en rotation l'axe 44 de la manivelle 42 qui entraine à son tour par l'intermédiaire de son maneton 43 coulissant dans la rainure 23, le plateau supérieur 20 dans un mouvement de va-et-vient par rapport au plateau intermédiaire. De même, le moteur entraîne en rotation également l'axe de la seconde manivelle qui entraîne à son tour par l'intermédiaire de son maneton coulissant dans la rainure 33 le plateau intermédiaire 40 dans un mouvement de va-et-vient par rapport au plateau fixe. Lors de ces mouvements de va-et-vient, le plateau intermédiaire coulisse le long des barres 21, 22, 31 et 32. Les manivelles sont positionnées sur leurs axes de façon à ce que les bras des deux manivelles ne soient pas alignés mais forment un angle compris entre 90 et 180° et de préférence égal à 150°. Cet angle permet aux mouvements des deux plateaux d'être légèrement décalés de façon à ce que, lorsque le plateau intermédiaire change de direction, le plateau supérieur en retard sur le plateau intermédiaire n'a pas encore changé de direction de sorte que sa vitesse par rapport au sol diminue au moment du changement de direction.

Cette configuration à double mouvement présente plusieurs avantages. En effet, la roue de la poussette posée sur l'élément motorisé du dispositif selon l'invention est entrainée par le plateau supérieur dont le mouvement est adouci par une vitesse qui diminue lors des changements de direction ce qui permet à la poussette de ne pas être trop secouée.

D'autre part, grâce aux mouvements de deux plateaux, l'amplitude totale du mouvement est supérieure à celle qui serait obtenue avec un seul plateau mobile. Ce qui permet d'obtenir une amplitude conséquente tout en réduisant la taille du dispositif.

En outre, le moteur tournant toujours dans le même sens et à vitesse constante minimise la consommation énergétique.

De façon avantageuse, la mise en route du mouvement cyclique de va-et-vient des plateaux est automatiquement enclenchée par l'utilisateur lors d'un actionnement manuel du premier mouvement. Cette fonction essentielle est définie plus en détail dans la suite de la description. L'élément secondaire 11 ne comporte pas de moteur mais comporte un plateau fixe et au moins un plateau mobile par rapport au plateau fixe. De préférence, l'élément secondaire comporte trois plateaux similaires à ceux de l'élément motorisé, un plateau intermédiaire libre de se déplacer en translation dans un mouvement de va-et-vient par rapport au plateau fixe posé au sol et un plateau supérieur libre de se déplacer en translation dans un mouvement de va-et-vient par rapport au plateau intermédiaire, les deux mouvements se faisant selon le même axe. L'amplitude totale de déplacement du plateau supérieur est de préférence égale à celle obtenu avec l'élément motorisé 10.

Les surfaces en contact avec le sol des deux éléments 10 et 11 sont munies chacune d'un patin antidérapant et d'une partie aimantée destinées à venir coopérer ensemble et maintenir les deux éléments collés l'un à l'autre. Selon un mode de réalisation différent, l'un des deux éléments se range à l'intérieur d'une cavité aménagée dans l'autre.

### ASPECTS ELECTRIQUES DU DISPOSITIF

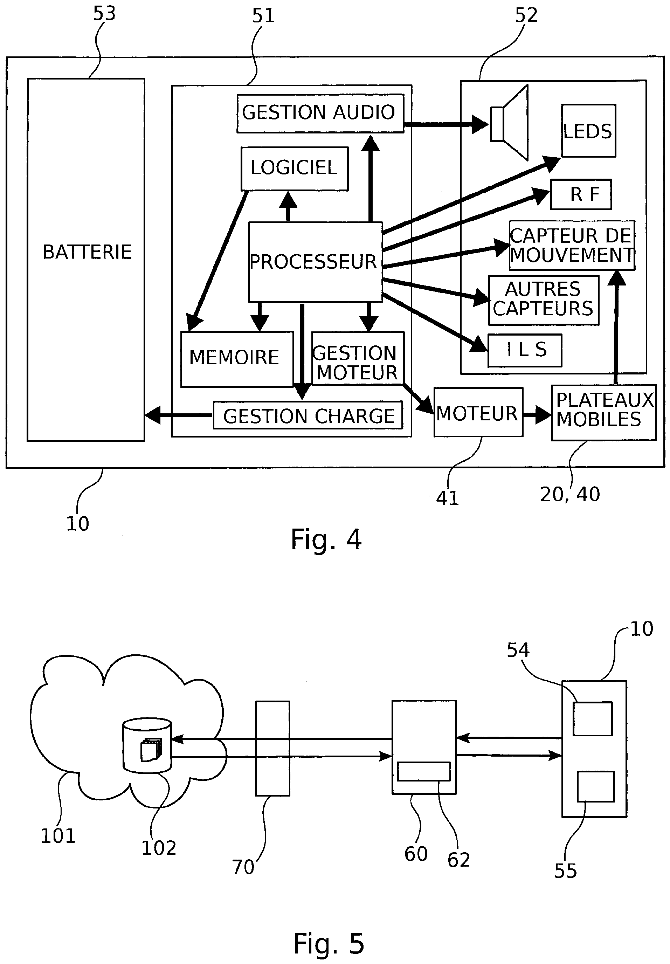

En référence à la figure 4, l'élément motorisé comprend également un module de contrôle et de pilotage 51, un module de périphériques 52 et un module de chargement tel qu'une batterie 53. Le module de contrôle et de pilotage comprend une carte électronique munie d'un processeur, d'un programme de contrôle, d'une mémoire et des moyens pour gérer les périphériques. Le module de périphériques 52 comprend un circuit émetteur/récepteur de signal radiofréquence (RF) donc capable d'échanger des données à distance avec un périphérique sans contact et un capteur de mouvements apte à fournir au processeur de l'information relative à l'agitation de l'enfant. Le module de périphériques comprend d'autres capteurs tel qu'un capteur de pression et des moyens de mesure du niveau de bruit, de la température et de l'hygrométrie ambiante, un dispositif audio, des LEDs et des moyens pour mettre l'élément motorisé en veille tel qu'un interrupteur à lames souples (ILS). Le capteur de pression permet au dispositif de détecter lorsque l'enfant est dans la poussette.

L'interrupteur ILS change d'état lorsque les deux éléments 10 et 11 sont en contact, par exemple lorsque leurs parties aimantées coopèrent ensemble. La veille peut signifier que le moteur est éteint et les plateaux verrouillés mais peut autoriser le fonctionnement de l'émetteur/récepteur de signal RF. La batterie 53 de l'élément motorisé est rechargeable au moyen d'un chargeur électrique sans fil ou à l'aide d'un adaptateur à relier au secteur. Une seconde batterie qui fait office de batterie de secours peut être contenue dans l'élément secondaire. La seconde batterie recharge la première lorsque les deux éléments sont en contact. L'élément motorisé dispose d'un indicateur de charge pour signaler à l'utilisateur l'état de charge de la batterie. Cet indicateur peut être une LED de couleur. Une LED peut également indiquer le statut du dispositif, tel que « en fonctionnement », « en veille » et « en train d'échanger des données avec le terminal numérique » selon la couleur.

### TERMINAL NUMERIQUE

Le circuit émetteur/récepteur de signal sans contact RF du dispositif motorisé 11 est de préférence basé sur une communication de type Bluetooth. En référence à la figure 5, le module Bluetooth 54 de l'élément motorisé 10 est capable d'échanger des données avec un terminal numérique 60 de type Smartphone. Cet échange d'informations peut se faire dans les deux sens. Le terminal numérique mobile 60 peut être un Smartphone, une tablette, un ordinateur et comprend un écran tactile. Le terminal numérique est connectable sans fil à une base de données 102 accessible sur le réseau internet 101 via un réseau de télécommunication et de géolocalisation ou autre. Une interface ou une application 62 installée sur le terminal numérique permet à l'utilisateur de contrôler l'état du dispositif et les données enregistrées pendant son utilisation. Les données de chaque dispositif peuvent être stockées dans la base de données 102 accessible par un moyen d'identification 70 de l'utilisateur. Sur l'interface 62, l'utilisateur retrouve également l'intégralité de ses données, programmes, paramétrages etc. Les données d'utilisation peuvent être visualisées par exemple sous forme de graphique d'utilisation en fonction du temps.

### PROGRAMME DE CONTRÔLE

Le programme de contrôle 55 mémorisé dans la mémoire de l'élément motorisé ne peut s'exécuter que lorsque l'élément motorisé n'est pas en veille. Le programme de contrôle est donc exécuté en l'absence de communication avec le terminal numérique. Principalement, le programme de contrôle commande le démarrage et l'arrêt du moteur, la durée des plages de fonctionnement et leur fréquence selon une séquence par défaut prédéfinie à l'avance et enregistrée dans la mémoire de l'élément motorisé. La séquence par défaut consiste à démarrer le moteur, le faire tourner pendant une durée comprise entre 2 minutes et 4 minutes, par exemple égale à 3 minutes, arrêter le moteur et mettre le dispositif « sur écoute », c'est à dire prêt à redémarrer en cas de mouvements de la poussette ou de pleurs. Le programme de contrôle par défaut peut être mis à jour par l'intermédiaire du terminal numérique 60 mais il peut évoluer également de façon autonome au fur et à mesure des utilisations tel qu'un système expert.

Le programme de contrôle peut s'adapter grâce à des informations que lui fournit l'élément motorisé, et enregistrées pendant son utilisation. Les informations peuvent être celles mesurées grâce aux capteurs et moyens de mesure environnementaux tels que le bruit, l'agitation de l'enfant, la température, l'humidité, etc. Adapter le programme de contrôle signifie définir ou modifier certaines variables de son fonctionnement à partir des paramètres enregistrées par les capteurs au fur et à mesure de l'utilisation du dispositif et définir une séquence adaptée.

Par l'intermédiaire de l'interface 62 de son terminal numérique, l'utilisateur peut choisir si au démarrage du dispositif, le programme de contrôle exécutera la séquence par défaut ou la séquence adaptée. Bien entendu, par l'intermédiaire de l'interface 62 du terminal numérique 60, l'utilisateur lui-même peut faire varier certains paramètres du programme de contrôle comme la durée des plages de fonctionnement et leur fréquence dans la limite de la plage maximum définie à l'avance pour la sécurité de l'enfant et pour éviter son conditionnement.

### PLATEFORME COLLABORATIVE

La base de données 102 accessible sur Internet est alimentée par les possesseurs et utilisateurs du dispositif selon l'invention qui utilisent l'application sur leur terminal numérique. Les données récoltées sont exploitées de façon anonyme. Elles permettent d'établir des statistiques et servent à l'élaboration d'une plateforme collaborative.

La base de données peut servir également à élaborer une nouvelle version du programme de contrôle et la mettre en ligne à disposition des utilisateurs. En effet, à partir des données récoltées, on peut établir des corrélations entre les variables d'environnement et la nécessité de bercer un enfant. Le programme de contrôle de l'utilisateur peut donc également s'adapter à partir de données disponibles sur la plateforme collaborative. Cette capacité à pouvoir se connecter à un réseau d'informations confère au dispositif selon l'invention la qualité d'objet connecté.

La suite de la description décrit le fonctionnement du dispositif selon l'invention.

Lorsque des parents ont besoin de bercer leur enfant placé dans une poussette, ils séparent les deux éléments 10 et 11 l'un de l'autre et les placent sur le sol. Le plateau fixe 30 de l'élément motorisé et le plateau fixe 130 de l'élément secondaire étant situés contre le sol, les roues de la poussette sur lesquelles le frein de poussette 5 est activé sont placées chacune sur un des éléments.

Le dispositif est mis en route par un geste volontaire de l'utilisateur consistant à pousser la poussette de façon à entraîner le plateau supérieur 20 de l'élément motorisé 10. Le capteur de mouvement envoie alors un message au processeur qui met en route le moteur et exécute le programme de contrôle. Le mouvement de va-et-vient des plateaux entraîne un balancement léger de la poussette. L'arrêt du balancement est automatique au bout d'une durée prédéfinie assez courte comprise entre 2 et 4 minutes. L'arrêt est progressif c'est à dire que la vitesse du mouvement de va-et-vient diminue progressivement avant de s'arrêter. A l'arrêt du moteur, les plateaux sont alignés entre eux de façon à ce que l'élément motorisé 10 forme un parallélépipède tel que représenté sur la figure 2. Le dispositif détecte alors tout mouvement de la poussette ou des pleurs qui signifieraient que l'enfant s'agite encore et le balancement serait alors repris automatiquement. A tout moment, le dispositif peut être remis en route et le balancement repris par un geste volontaire de l'utilisateur. Le dispositif peut ainsi se mettre en route plusieurs fois de façon consécutive pendant de courts laps de temps jusqu'à ce que l'enfant soit calme.

Le dispositif peut également être arrêté de façon volontaire par l'utilisateur. Pour cela, l'utilisateur retient la poussette, un signal est envoyé par le capteur de mouvement au processeur et le module de contrôle et de pilotage envoie un signal d'arrêt au moteur. L'arrêt du dispositif est également commandé lorsque l'utilisateur retire la poussette du dispositif, ou lorsque l'enfant est retiré de la poussette qui repose sur le dispositif. Dans ces deux cas, le capteur de pression détecte un changement de poids et le module de contrôle et de pilotage envoie un signal d'arrêt au moteur.

A chaque utilisation du dispositif, des données sont enregistrées telles que le nombre de fois consécutives où le dispositif s'est mis en route, l'heure, le niveau de bruit ambiant, l'hygrométrie, la température. Les données sont stockées dans la mémoire de l'élément motorisé en attendant d'être envoyées au terminal numérique 60.

Aucune communication entre le terminal numérique 60 et l'élément motorisé 10 n'est possible et autorisé lorsque le dispositif est placé sous les roues de la poussette et en fonctionnement. En effet, dès que les deux éléments sont séparés l'un de l'autre, le module Bluetooth 54 est éteint, alors que, lorsque les deux éléments sont associés l'un à l'autre par contact aimanté ou par insertion de l'un dans l'autre, la communication est de nouveau possible. Cette interruption de la communication sans fil activée par l'interrupteur à lames souples, permet au dispositif de ne pas émettre d'ondes radio lorsqu'il est utilisé donc lorsqu'il est à proximité de l'enfant.

Dès les premières données stockées, le programme de contrôle peut s'adapter selon le contenu des données comme on l'a vu précédemment.

Par exemple, si le nombre de fois consécutives où le dispositif se met en mouvement est supérieur à 4, (l'enfant ne s'est pas calmé malgré les périodes de balancement consécutives), le programme de contrôle est modifié de façon à ce que lors de la prochaine utilisation, la durée du premier cycle de balancement sera augmentée. Le programme de contrôle peut être adapté grâce à d'autres données comme par exemple l'heure de la journée, la température ambiante, etc. En outre, le programme de contrôle même adapté est toujours ajusté pour éviter le conditionnement de l'enfant. Par exemple, deux séquences de fonctionnement consécutives correspondant chacune à un endormissement de l'enfant ne seront pas identiques.

L'élément motorisé est muni d'un haut-parleur de façon à diffuser des sons tels que des berceuses ou des bruits de nature. Ces sons préalablement enregistrés dans la mémoire de l'élément motorisé peuvent être choisis et enregistrés par l'utilisateur lui-même par l'intermédiaire de l'interface 62 du terminal numérique 60.

Grâce au capteur de pression de l'élément motorisé 10, le dispositif peut également avertir par signal lumineux ou signal sonore lorsque l'enfant est retiré de la poussette.

## Revendications

1. Dispositif de balancement de poussette (2) comprenant au moins un élément motorisé (10) munie d'un plateau supérieur (20) qui se déplace dans un mouvement de va-et-vient par rapport à un plateau fixe (30) posé au sol, la face externe dudit plateau supérieur (20) étant adapté pour recevoir une roue de la poussette,
**caractérisé en ce que** le dispositif comprend un moyen pour démarrer automatiquement le mouvement de va-et-vient par un geste volontaire de l'utilisateur consistant à pousser la poussette (2) de façon à entraîner ledit plateau supérieur (20) de l'élément motorisé (10).

2. Dispositif selon la revendication 1, dans lequel ledit élément motorisé (10) comporte un plateau intermédiaire (40) mobile par rapport audit plateau fixe (30) et sur lequel coulisse ledit plateau supérieur (20).

3. Dispositif selon la revendication 2,
dans lequel l'élément motorisé comprend un moteur (41) fixé audit plateau intermédiaire (40), ledit moteur est adapté à entraîner un axe (44) sur lequel est fixée l'extrémité d'une manivelle (42), ledit axe faisant tourner ladite manivelle dans un plan parallèle au sol, ladite manivelle entraînant à son tour ledit plateau supérieur (20) dans un mouvement en translation de va-et-vient par rapport audit plateau intermédiaire (40) grâce à un maneton (43) situé à l'extrémité libre de ladite manivelle qui coulisse dans une rainure (23) située sur la face interne dudit plateau supérieur (20).

4. Dispositif selon la revendication 3, dans lequel ledit moteur (41) est adapté à entraîner un second axe sur lequel est fixé l'extrémité d'une seconde manivelle, ledit second axe faisant tourner ladite seconde manivelle dans un plan parallèle au sol, ladite seconde manivelle entraînant à son tour ledit plateau intermédiaire (40) dans un mouvement en translation de va-et-vient par rapport audit plateau fixe (30) grâce à un maneton situé à l'extrémité libre de ladite seconde manivelle qui coulisse dans une rainure (33) située sur la face interne dudit plateau fixe (30).

5. Dispositif selon l'une des revendications 3 ou 4, dans lequel lesdits plateaux supérieur (20) et fixe (30) comprennent des moyens de guidage (21, 22, 31, 32) le long desquels coulissent ledit plateau intermédiaire (40).

6. Dispositif selon la revendication 4 ou 5, dans lequel les bras desdites deux manivelles ne sont pas alignés mais forment un angle compris entre 90° et 180° et de préférence égal à 150°.

7. Dispositif selon l'une des revendications précédentes, dans lequel le dispositif comprend un élément secondaire (11) non motorisé comprenant un plateau fixe (130) et au moins un plateau supérieur mobile (120) par rapport audit plateau fixe (130) .

8. Dispositif selon la revendication 7, dans lequel lesdits plateaux supérieurs (20, 120) comportent des moyens pour empêcher la roue de sortir du plateau involontairement.

9. Dispositif selon la revendication 7 ou 8, dans lequel les surfaces en contact avec le sol desdits deux éléments (10, 11) sont munies d'un patin antidérapant et d'une partie aimantée destinées à coopérer ensemble et maintenir ensemble les deux éléments (10, 11) lorsqu'ils ne sont pas utilisés.

10. Dispositif selon la revendication 9, comprenant un moyen pour mettre ledit élément motorisé (10) en veille, ledit moyen étant un interrupteur à lames souples (ILS) qui change d'état lorsque lesdits deux éléments (10, 11) coopèrent par contact desdites parties aimantées.

11. Dispositif selon l'une des revendications précédentes, dans lequel ledit élément motorisé (10) comprend un module de contrôle et de pilotage (51), un module de périphériques (52) et un module de chargement tel qu'une batterie (53), lesdits trois modules étant reliés entre eux.

12. Dispositif selon la revendication 11, dans lequel ledit module de contrôle et de pilotage (51) comprend une carte électronique munie d'un processeur, d'un programme de contrôle (55), d'une mémoire et de moyens pour gérer le module de périphériques, ledit programme de contrôle (55) est adapté à commander le démarrage et l'arrêt du moteur, la durée des plages de fonctionnement et leur fréquence selon une séquence prédéfinie à l'avance et enregistrée dans ladite mémoire dudit élément motorisé (10).

13. Dispositif selon la revendication 12, dans lequel ledit module de périphériques (52) comprend un circuit émetteur/récepteur de signaux radiofréquence (RF) tel qu'un module Bluetooth (54), et un capteur de mouvement apte à fournir au processeur de l'information relative à l'agitation de l'enfant.

14. Dispositif selon la revendication 12 ou 13, dans lequel ledit module de périphériques (52) comprend un capteur de pression, des moyens de mesure du niveau de bruit de la température et de l'hygrométrie ambiantes, un haut-parleur, des LEDs et un moyen pour mettre ledit élément motorisé (10) en veille.

15. Dispositif selon la revendication 13, dans lequel ledit module Bluetooth (54) de l'élément motorisé (10) est capable de communiquer et d'échanger des données avec un terminal numérique (60) de type Smartphone, l'échange de données n'étant autorisé et possible que lorsque lesdits deux éléments (10, 11) sont en contact c'est à dire lorsque ledit dispositif est en veille.

16. Dispositif selon la revendication 15, dans lequel ledit terminal numérique mobile (60) est un Smartphone, une interface ou une application (62) installée sur le terminal numérique permettant à l'utilisateur de contrôler après l'utilisation dudit dispositif les données enregistrées pendant son utilisation.

17. Dispositif selon la revendication 16, dans lequel les données dudit dispositif sont stockées dans une base de données (102) accessible par un moyen d'identification (70) de l'utilisateur sur Internet, ladite base de données (102) accessible sur Internet étant alimentée par les possesseurs et utilisateurs du dispositif selon l'invention qui utilisent l'interface (62) sur leur terminal numérique, ladite base de données étant exploitée de façon anonyme afin d'établir des statistiques et servant à l'élaboration d'une plateforme collaborative.

18. Dispositif selon l'une des revendications 12 à 17, dans lequel ledit programme de contrôle (55) est adapté pour s'exécuter automatiquement après que le dispositif a démarré par un geste volontaire de l'utilisateur, selon une séquence par défaut ou selon une séquence adaptée après plusieurs utilisations aux différentes données enregistrées par lesdits capteurs, lesdites séquences étant adaptées pour être enregistrées dans la mémoire dudit élément motorisé.

19. Dispositif selon l'une des revendications 11 18 lorsqu'il dépend de la revendication 7, dans lequel ledit élément secondaire (11) contient une batterie de secours qui est adapté pour recharger ladite batterie (53) lorsque lesdits deux éléments (10, 11) sont en contact.

20. Dispositif selon l'une des revendications 14 à 19, dans lequel un signal sonore ou lumineux est émis lorsque l'enfant est retiré de la poussette.

## Patentansprüche

1. Vorrichtung zum Schaukeln eines Kinderwagens (2), die mindestens ein motorisiertes Element (10) beinhaltet, das über eine obere Platte (20) verfügt, die sich in Bezug auf eine feste Platte (30), die sich auf dem Boden befindet, mit einer Hin- und Herbewegung bewegt, wobei die Außenfläche der oberen Platte (20) dazu angepasst ist, ein Rad des Kinderwagens aufzunehmen,
**dadurch gekennzeichnet, dass** die Vorrichtung ein Mittel zum automatischen Starten der Hin- und Herbewegung durch eine gewollte Geste des Benutzers beinhaltet, die darin besteht, den Kinderwagen (2) so zu schieben, dass die obere Platte (20) des motorisierten Elements (10) angetrieben wird.

2. Vorrichtung nach Anspruch 1, wobei das motorisierte Element (10) eine Zwischenplatte (40) umfasst, die mit Bezug auf die feste Platte (30) beweglich ist und auf der die obere Platte (20) gleitet.

3. Vorrichtung nach Anspruch 2, wobei das motorisierte Element einen Motor (41) beinhaltet, der an der Zwischenplatte (40) befestigt ist, wobei der Motor dazu angepasst ist, eine Achse (44), an der das Ende einer Kurbel (42) befestigt ist, anzutreiben, wobei die Achse die Kurbel in einer zum Boden parallelen Ebene dreht, wobei die Kurbel ihrerseits die obere Platte (20) mit Bezug auf die Zwischenplatte (40) mit einer translatorischen Hin- und Herbewegung antreibt, mit Hilfe eines Zapfens (43), der sich an dem freien Ende der Kurbel befindet und der in einer Nut (23) gleitet, die sich auf der Innenfläche der oberen Platte (20) befindet.

4. Vorrichtung nach Anspruch 3, wobei der Motor (41) dazu angepasst ist, eine zweite Achse, an der das Ende einer zweiten Kurbel befestigt ist, anzutreiben, wobei die zweite Achse die zweite Kurbel in einer zum Boden parallelen Ebene dreht, wobei die zweite Kurbel ihrerseits die Zwischenplatte (40) mit Bezug auf die feste Platte (30) mit einer translatorischen Hin- und Herbewegung antreibt, mit Hilfe eines Zapfens, der sich an dem freien Ende der zweiten Kurbel befindet und der in einer Nut (33) gleitet, die sich auf der Innenfläche der festen Platte (30) befindet.

5. Vorrichtung nach einem der Ansprüche 3 oder 4, wobei die obere (20) und die feste (30) Platte Führungsmittel (21, 22, 31, 32) beinhalten, entlang derer die Zwischenplatte (40) gleitet.

6. Vorrichtung nach Anspruch 4 oder 5, wobei die Arme der zwei Kurbeln nicht aufeinander ausgerichtet sind, sondern einen Winkel zwischen 90° und 180° und vorzugsweise von 150° bilden.

7. Vorrichtung nach einem der vorhergehenden Ansprüche, wobei die Vorrichtung ein nicht motorisiertes sekundäres Element (11) beinhaltet, das eine feste Platte (130) und mindestens eine obere Platte (120), die mit Bezug auf die feste Platte (130) beweglich ist, beinhaltet.

8. Vorrichtung nach Anspruch 7, wobei die oberen Platten (20, 120) Mittel umfassen, die verhindern, dass das Rad die Platte ungewollt verlässt.

9. Vorrichtung nach Anspruch 7 oder 8, wobei die mit dem Boden in Kontakt stehenden Oberflächen der zwei Elemente (10, 11) über einen rutschfesten Belag und einen magnetisierten Teil verfügen, die dazu bestimmt sind, zusammenzuwirken und die beiden Elemente (10, 11) zusammenzuhalten, wenn sie nicht in Gebrauch sind.

10. Vorrichtung nach Anspruch 9, die ein Mittel beinhaltet, um das motorisierte Element (10) in einen Ruhezustand zu versetzen, wobei das Mittel ein Reedschalter (ILS) ist, der den Zustand ändert, wenn die zwei Elemente (10, 11) durch Kontakt der magnetisierten Teile zusammenwirken.

11. Vorrichtung nach einem der vorhergehenden Ansprüche, wobei das motorisierte Element (10) ein Steuer- und Ansteuermodul (51), ein Peripheriegerätemodul (52) und ein Lademodul, wie etwa eine Batterie (53), beinhaltet, wobei die drei Module untereinander verbunden sind.

12. Vorrichtung nach Anspruch 11, wobei das Steuer- und Ansteuermodul (51) eine Leiterplatte beinhaltet, die über einen Prozessor, ein Steuerprogramm (55), einen Speicher und Mittel zum Verwalten des Peripheriegerätemoduls verfügt, wobei das Steuerprogramm (55) dazu angepasst ist, das Starten und Stoppen des Motors, die Dauer der Betriebsbereiche und ihre Frequenz gemäß einer im Vorfeld definierten Sequenz, die im Speicher des motorisierten Elements (10) aufgezeichnet ist, zu steuern.

13. Vorrichtung nach Anspruch 12, wobei das Peripheriegerätemodul (52) eine Schaltung zum Senden/Empfangen von Funkfrequenz(RF)-Signalen, wie etwa ein Bluetooth-Modul (54), und einen Bewegungssensor, der dazu geeignet ist, Informationen über Bewegungen des Kindes an den Prozessor zu liefern, beinhaltet.

14. Vorrichtung nach Anspruch 12 oder 13, wobei das Peripheriegerätemodul (52) einen Drucksensor, Mittel zum Messen des Geräuschpegels, der Temperatur und der Feuchtigkeit in der Umgebung, einen Lautsprecher, LEDs und ein Mittel zum Versetzen des motorisierten Elements (10) in einen Ruhezustand beinhaltet.

15. Vorrichtung nach Anspruch 13, wobei das Bluetooth-Modul (54) des motorisierten Elements (10) dazu fähig ist, Daten an ein digitales Endgerät (60) vom Typ Smartphone zu kommunizieren und mit ihm auszutauschen, wobei der Datenaustausch nur zulässig und möglich ist, wenn die zwei Elemente (10, 11) in Kontakt sind, das heißt, wenn sich die Vorrichtung im Ruhezustand befindet.

16. Vorrichtung nach Anspruch 15, wobei das mobile digitale Endgerät (60) ein Smartphone, eine Schnittstelle oder eine in dem digitalen Endgerät installierte Anwendung (62) ist, die es dem Benutzer gestatten, nach dem Gebrauch der Vorrichtung die während ihres Gebrauchs aufgezeichneten Daten zu prüfen.

17. Vorrichtung nach Anspruch 16, wobei die Daten der Vorrichtung in einer Datenbank (102) gespeichert werden, auf die im Internet mittels eines Identifikationsmittels (70) des Benutzers zugegriffen werden kann, wobei die Datenbank (102), auf die im Internet zugegriffen werden kann, von den Besitzern und Benutzern der Vorrichtung gemäß der Erfindung, die die Schnittstelle (62) auf ihrem digitalen Endgerät benutzen, vervollständigt wird, wobei die Datenbank anonym ausgewertet wird, um Statistiken zu erstellen, und zur Erstellung einer kollaborativen Plattform dient.

18. Vorrichtung nach einem der Ansprüche 12 bis 17, wobei das Steuerprogramm (55) dazu angepasst ist, automatisch ausgeführt zu werden, nachdem die Vorrichtung durch eine gewollte Geste des Benutzers gestartet wurde, gemäß einer standardmäßigen Sequenz oder gemäß einer Sequenz, die nach mehreren Gebrauchsvorgängen an die unterschiedlichen, durch die Sensoren aufgezeichneten Daten angepasst wurde, wobei die Sequenzen dazu angepasst sind, in dem Speicher des motorisierten Elements aufgezeichnet zu werden.

19. Vorrichtung nach einem der Ansprüche 11 bis 18, wenn er von Anspruch 7 abhängt, wobei das sekundäre Element (11) eine Stützbatterie enthält, die dazu angepasst ist, die Batterie (53) wiederaufzuladen, wenn die zwei Elemente (10, 11) in Kontakt sind.

20. Vorrichtung nach einem der Ansprüche 14 bis 19, wobei ein Ton- oder Lichtsignal ausgegeben wird, wenn das Kind aus dem Kinderwagen herausgenommen wird.

## Claims

1. A stroller rocking device (2) comprising at least one motorised element (10) provided with a top plate (20) that moves in a to-and-fro movement relative to a stationary plate (30) positioned on the ground, the outer face of said top plate (20) being suitable for receiving a wheel of the stroller.
**characterised in that** the device includes a means for automatically starting the to-and-fro movement with a deliberate gesture by the user consisting in pushing the stroller (2) in such a way as to drive said top plate (20) of the motorised element (10).

2. The device according to claim 1, wherein said motorised element (10) includes an intermediate plate (40) movable relative to said stationary plate (30) and on which slides said top plate (20).

3. The device according to claim 2, wherein the motorised element comprises a motor (41) secured to said intermediate plate (40), said motor being adapted to drive a shaft (44) on which is secured the end of a crank (42), said shaft rotating said crank in a plane parallel to the ground, said crank in turn driving said upper plate (20) in a to-and-fro translational movement relative to said intermediate plate (40) by means of a crankpin (43), located at the free end of said crank, which slides in a groove (23) located on the inner face of said top plate (20).

4. The device according to claim 3, wherein said motor (41) being adapted to drive a second shaft on which the end of a second crank is secured, said second shaft rotating said second crank in a plane parallel to the ground, said second crank driving in turn said intermediate plate (40) in a to-and-fro translational movement relative to said stationary plate (30) by means of a crankpin, located at the free end of said second crank, which slides in a groove (33) located on the inner face of said stationary plate (30).

5. The device according to any one of claims 3 or 4, wherein said top plate (20) and stationary plate (30) include guide means (21, 22, 31, 32) along which said intermediate plate (40) slide.

6. The device according to claim 4 or 5, wherein the arms of said two cranks are not aligned but form an angle between 90° and 180°, and preferably equal to 150°.

7. The device according to any one of the preceding claims, wherein the device includes a non-motorised secondary element (11) comprising a stationary plate (130) and at least one top plate (120) which is movable relative to said stationary plate (130).

8. The device according to claim 7, wherein said top plates (20, 120) include means for preventing the wheel from leaving the plate unintentionally.

9. The device according to claim 7 or 8, wherein the surfaces in contact with the ground of said two elements (10, 11) are provided with a non-slip pad and with a magnetised part intended to cooperate and hold the two elements together (10, 11) when not in use.

10. The device according to claim 9, including a means for putting said motorised element (10) on standby, said means being a reed switch, the state of which changes when said two elements (10, 11) cooperate by contact of said magnetised parts.

11. The device according to any one of the preceding claims, wherein said motorised element (10) comprises a control and piloting module (51), a peripheral module (52) and a charging module such as a battery (53), said three modules being interconnected.

12. The device according to claim 11, wherein said control and piloting module (51) comprises an electronic board provided with a processor, a control program (55), a memory, and means for managing the peripheral module, said control program (55) is adapted to control the starting and stopping of the motor, the duration of the operating ranges and their frequency according to a sequence which is preset and recorded in said memory of said motorised element (10).

13. The device according to claim 12, wherein said peripheral module (52) comprises a radio frequency (RF) transceiver circuit such as a Bluetooth module (54), and a motion sensor able to provide the processor with information about the restlessness of the child.

14. The device according to claim 12 or 13, wherein said peripheral module (52) comprises a pressure sensor, means for measuring the noise level, ambient temperature and humidity, a loudspeaker, LEDs and a means for putting said motorised element (10) on standby.

15. The device according to claim 13, wherein said Bluetooth module (54) of the motorised element (10) is capable of communicating and exchanging data with a digital terminal (60) of the smartphone type, the exchange of data being authorised and possible only when said two elements (10, 11) are in contact, that is to say when said device is on standby.

16. The device according to claim 15, wherein said mobile digital terminal (60) is a smartphone, an interface or an application (62) installed on the digital terminal allowing the user to control, after the use of said device, the data recorded during its use.

17. The device according to claim 16, wherein the data of said device is stored in a database (102) accessible by a means of identification (70) of the user on the Internet, said database (102), accessible on the Internet, being fed by the owners and users of the device according to the invention who use the interface (62) on their digital terminal, said database being used anonymously in order to establish statistics and for the development of a collaborative platform.

18. The device according to any one of claims 12 to 17, wherein said control program (55) is adapted to run automatically after the device has started with a deliberate gesture by the user, according to a default sequence or according to a sequence which is adapted after several uses of the various data recorded by said sensors, said sequences being adapted to be record in the memory of said motorised element.

19. The device according to any one of claims 11 to 18 when it depends to claim 7, wherein said secondary element (11) contains a backup battery adapted to recharge said battery (53) when said two elements (10, 11) are in contact.

20. The device according to any one of claims 14 to 19, wherein an audible signal or a light signal is emitted when the child is removed from the stroller.
